Europäisches Patentamt

European Patent Office

Office européen des brevets

(19)

(11) **EP 1 411 277 A1**

(12) **EUROPEAN PATENT APPLICATION**

(43) Date of publication:
**21.04.2004 Bulletin 2004/17**

(51) Int Cl.7: **F16H 61/06**, F16H 61/00

(21) Application number: **02079256.0**

(22) Date of filing: **16.10.2002**

| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventors: <br> • **Mussaeus, Marc André** <br>   **5643 BX Eindhoven (NL)** <br> • **Rienks, Maurice Didier** <br>   **6291 CJ Vaals (NL)** |
|---|---|
| (71) Applicant: **Van Doorne's Transmissie B.V.** **5000 AM Tilburg (NL)** | |

(54) **Gearshift control method for an automatic transmission and automatic transmission operated in accordance therewith**

(57) Control method for a stepped automatic transmission for transmitting power between two inertia components (1; 2) at distinct speed ratios, which components respectively represent at least an engine for generating an engine torque Teng on an input shaft (7) of said transmission and a load connected to an output shaft (8) of said transmission, provided with two power transmission paths (3, H, 6; 3, 4, L, 5, 6) between said shafts, which paths each provide a distinct transmission speed ratio and respectively are provided with a high clutch (H) having an adjustable torque transmitting capacity Th and a low clutch (L) having an adjustable torque transmitting capacity Tl, wherein, at least during normal operation of the stepped automatic transmission and at least when the speed ratio is constant, at least one of said torque transmitting capacities is adjusted to be essentially equal to the torque level on the input shaft (7), i.e. the input torque Tin.

FIG. 2

EP 1 411 277 A1

Printed by Jouve, 75001 PARIS (FR)

## EP 1 411 277 A1

**Description**

The present invention relates to a gearshift control method for a stepped automatic transmission for power transfer from the engine to the wheels in a vehicle drive line, as defined in the preamble of claim 1. The invention further relates to an automatic transmission operated in accordance with such a transmission.

Such transmissions are generally known, e.g. from European patent 0 670 789, which is regarded included here by reference, and generally are used in a drive line of a motor vehicle for power transfer from an engine or a motor to the wheels of the vehicle at two or more discrete torque and rotational speed ratios. They consist of at least two clutches for shifting from one power transmission path within the drive line to another transmission path, either for a power transmission with a smaller transmission speed ratio (defined as transmission output speed divided by transmission input speed) or for a larger transmission speed ratio, whereby the torque ratio of the transmission of course changes in the opposite direction. Said two types of shift are respectively also denoted as down shift and up shift or gearshift in general.

The most elaborate transmission gearshift control methods are able to perform both an up shift and a down shift with positive or negative torque transfer under continuous torque transmission in either direction, i.e. from the engine to the wheels and vice versa. These shifts are referred to as "clutch-to-clutch" shifts. These control methods thereby comprise a steady state phase and two phases, viz. a release phase and a shift phase.

In the steady state phase one of said two clutches is fully engaged, i.e. closed, generally by means of a hydraulic clutch engagement pressure clamping clutch plates together such that torque may be transmitted there between by means of friction, whereas the other or second clutch is fully opened, i.e. not transmitting any torque at all. The said clutch engagement pressure is chosen such that said torque is transmitted without any mutual slip between the clutch plates, e.g. by determining a minimally required clutch slip torque by multiplying the torque to be transmitted by a safety margin larger than 1 and, subsequently, by determining the hydraulic engagement pressure required to realise such clutch slip torque. Alternatively, the clutch engagement pressure may be set simply at the highest level possible, such that the said safety margin larger than 1 in fact varies in dependency on the torque to be transmitted. In any case, said safety margin is set high enough so that clutch slip will only occur during gearshift.

Before the actual transmission speed ratio can be changed, it is required that the clutch slip torque essentially coincides with the torque to be transmitted, i.e. when it is on the verge of or slightly slipping. So, departing from said steady state phase and as a first step of the gearshift, the clutch engagement pressure of the fully engaged clutch is lowered to a level where the clutch slip torque essentially coincides with the torque to be transmitted. In the control method this corresponds to reducing the said safety margin to 1. This first step is referred to as the release phase, which constitutes a principally unwanted delay before the said actual change in the transmission speed ratio. Thereafter the shift phase is initiated, in which phase both the torque transmission is switched from the previously engaged clutch to the other clutch and the transmission speed ratio is switched, each in a separate step of the control method by the proper mutual adjusting of the clutch engagement pressures.

It may be understood that it is a particular difficulty effort to correctly time and match the clutch engagement pressure at the respective clutches involved in the gearshift. In this respect, if a clutch is engaged too loosely, the engine speed may increase considerably (known as engine flair), whereas if it is engaged too hard the engine speed may decrease (known as engine tie-up), both effects being highly undesirable. In the state of the art transmission, a supposedly correct instant and level of engagement and/or disengagement of the clutches is found by empirical calibration, i.e. by trial and error. A further complication is that the actual clutch slip torque may appreciably change at different circumstances, e.g. in dependence on temperature, in particular oil temperature, the transmission torque level and the coefficient of friction between the clutch plates. The latter in turn being influenced by a multiplicity of factors, including the temperature, wear and tear, i.e. ageing, of the plates and of the oil respectively.

Thus, the contemporary control method for automatic transmissions suffers from an elaborate calibration procedure and, moreover, is inherent difficulty to adapt to changing circumstances. Also, it includes an unwanted time delay by the release phase, whereas a gearshift is preferably performed as fast as possible.

The current invention in a specific respect seeks to shorten the time required for a gearshift and in another respect also aims to enhance the overall quality of a shifting operation by seeking an inherently more adaptive gearshift control method.

According to the invention, such overall enhancement of a gearshift in a stepped automatic transmission may be favourably realised by the control method in accordance with the characterising features of the present claim 1. With a construction according to the invention, as will be elucidated hereinafter, a gearshift may be performed faster, and, moreover, with appropriate clutch engagements pressures that are advantageously based on an in all circumstances accurately known torque level. The gearshift control method according to the invention may be implemented in a single phase and may obviate the specific calibration procedure mentioned above, thereby reducing development cost and improving the robustness of the gearshift operation. Finally, but not in the least, the invention comes with the advantage that the vehicle driveline in which the method is implemented is effectively protected against torque jumps and vibrations, such as are known to emanate from the engine or to be induced by the load. Thereby, the mechanical requirements on driveline components are advantageously reduced, as the energy represented by said torque jumps and vibrations is dissipated by the clutch. Thus under normal circumstances, the maximum torque to be transmitted by the driveline will effectively be limited to the maximum nominal engine torque.

It is remarked that the advantage of protection against torque jumps is in particular relevant in case the driveline also includes a continuously variable transmission (CVT). In such a drive line the overall efficiency of the drive line may be advantageously improved in a manner analogous to what is discussed in the European patent EP-B1-1.069.331, i.e. by lowering the normal force applied in a frictional contact between a transmission belt and a pulley in relation to the minimum required normal force for transmitting the engine torque essentially without slip between the belt and the pulley occurring, relative to the conventionally applied normal force that generally amounts to about 1.3 times the said minimum required normal force.

For attaining the above-mentioned advantages the actual torque transferred to the vehicle wheels is, in a construction according to the invention, determined as a function of measured revolutions at each, i.e. the ingoing and the outgoing, side of the slipping, but torque transmitting clutch. Thereby, the absolute value of the transmitted torque $Tcl$, alternatively denoted the clutch torque transmitting capacity or torque capacity for short, may be accurately determined from the difference between these measured revolutions, i.e. the clutch slip $Scl$, the clutch engagement pressure $Pcl$, the friction coefficient between the clutch plates as a function of said clutch slip, i.e. the pre-determined clutch friction characteristic $\mu(Scl)$, and a calculated proportionality parameter related to the number and geometry of the clutch plates $C$, according to:

$$|Tcl| = \mu(Scl) * C * Pcl \tag{1}$$

Using such accurately known transmitted torque $Tcl$ value, the engine torque may, according to the invention, be controlled relatively accurately during the gearshift operation. Further, it becomes possible to adapt an engine map, i.e. a predetermined dependency of the engine torque on an engine rotational speed, an amount of fuel supplied to the engine and a so-called spark advance angle, based on such accurately known torque value $Tcl$ which in steady state condition is essentially equal to the engine torque. Such adaptation may be considered advantageous because often the predetermined engine map provides an inaccurate engine torque value, particularly at a low engine rotational speed and/or a low torque level.

Additionally, when the transmitted torque is accurately known anyway, e.g. in said steady state phase at a relatively high engine rotational speed and torque level, this equation (1) may also be used to adapt the clutch friction characteristic $\mu(Scl)$, e.g. to account for wear of the clutch plates or a temperature change.

Also, the invention thus renders superfluous the release phase, as the torque transmitting clutch is continuously kept in a slipping state, so that the shift phase that may be performed according to a known strategy, may immediately follow the steady state phase when a gearshift is desired.

Inter alia, when in accordance with the principle underlying the present invention the clutch slip $Scl$ is kept relatively small, i.e. below 20 rpm or less, both the energy dissipation and wear of the clutch plate appears to be of an acceptable level.

Also, according to the invention, a fail-safe mode may be provided in the gearshift control method, wherein after an anomaly has been detected, the clutches are again fully closed in the steady state phase, i.e. the clutch plates are engaged with a safety margin larger than 1, and a conventional gearshift control method is implemented for effecting a gear shift.

Finally, it is remarked that the gearshift control method according to the invention functions in a particularly advantageous manner in combination with a shift phase that is performed as described in the earlier European patent application in the name of applicant and filed on April 10, 2002. In such case, both in the steady state phase and in the shift phase the same control parameters are used and, also, the resulting required control algorithm will be extremely simple and effective.

In the following the invention will be further explained along a drawing in which:

Figure 1 represents an abstraction of a vehicle drive line including an automatic transmission denoted gearset,
Figure 2 represents the abstraction of the driveline according to figure 1, further including a continuously variable transmission,
Fig. 3 illustrates the gearset in more detail,
Fig. 4 is a state-machine of a known gearshift control method,
Fig. 5 is a state-machine of the gearshift control method according to the invention,
Fig. 6 is a state-machine of the gearshift control method according to a further elaboration of the invention, and
Fig. 7 shows graphs of the gearset speed ratio and several torque levels versus time during a typical gearshift, in casu an up-shift with a positive input torque with the gearshift control method according to the invention.

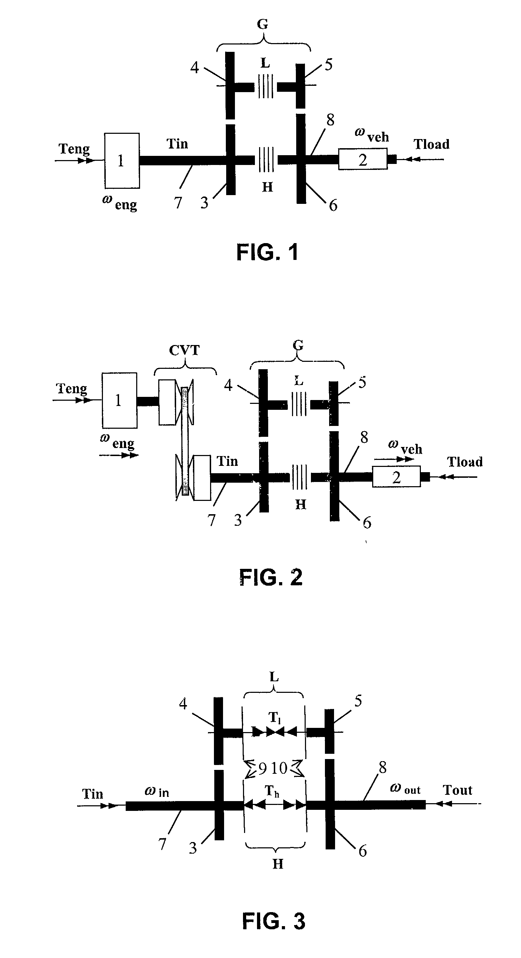

Figure 1 represents an abstraction of a vehicle drive-line with a stepped automatic transmission or gearset G. The drive-line comprises two inertia components 1 and 2, usually mainly determined by an engine 1 and a load or driven wheels of a vehicle 2 that are selectively connectable through the gearset G, which has an input shaft 7 rotationally connected to the engine and an output shaft 8 rotationally connected to the load. The gearset G comprises gearwheels 3, 4, 5 and 6 constituting two gearings 3,4 and 5,6 as well as two friction elements L and H. In this example, the friction element L, also denoted low clutch L, when engaged connects the said inertia components 1 and 2 through the said two gearings 3,4 and 5,6, while friction element H, also denoted high clutch H, when engaged connects the said inertia components 1 and 2 directly. In this example, with the high clutch H fully engaged, here also denoted ratio High, a 1 to 1 transmission speed and torque ratio is thus realised, while with the low clutch L fully engaged a transmission speed ratio is realised that is determined by gear ratio of the said two gearings 3, 4 and 5, 6. In this example, whenever relevant, the output/input speed ratio of the first gearing 3,4 is chosen equal to 1 and that of the second gearing 5,6 is chosen as 1/z. The overall output/input speed ratio of the gearset G with the low clutch L fully engaged, here also denoted as ratio Low, thus also being equal to 1/z. The output/input torque ratio of the transmission of course being equal to the factor z itself. Factor z is chosen larger than 1 throughout this example.

Inertia component 1 incorporates all inertia sub-components upstream of the clutches L and H, e.g. in figure 1 the inertia of the gear wheels 3 and 4, the input shaft 7 and the engine. Such sub-components may, for example, also include a torque converter, shafts, gearings and possibly even a continuously variable transmission (CVT), which may be included in the driveline as illustrated in figure 2. Inertia component 2 incorporates all inertia sub-components downstream of the clutches L and H, e.g. in figure 1 the inertia of the gear wheels 5 and 6, the output shaft 8 and the load, i.e. including the inertia of the vehicle. An engine torque Teng, i.e. a torque generated by an (combustion) engine or motor, and a road load torque Tload are acting on inertia components 1 and 2 respectively, which components are rotating at a engine rotational speed $\omega$eng and vehicle rotational speed $\omega$veh respectively.

In figure 3 the gearset G is shown to include two clutch plates 9 and 10 of a possible multitude of plates for each of the low and high clutch L and H, which clutch plates 9 and 10 are associated with the input shaft 7 or the output shaft 8 respectively. Figure 3 further defines the torque capacity Tl and Th of the low and high clutch L and H respectively. For a hydraulically operated slipping clutch the absolute value of these torque capacities may be calculated using equation (1). Further, as discussed in the above and illustrated in figure 2, the engine or motor need not necessarily be directly connected with the input shaft 7 of the gearset G, therefore the torque level at the input shaft Tin and its rotational speed $\omega$in are defined as separate parameters, which, however, still can be derived from the engine torque Teng and engine rotational speed $\omega$eng for each drive line configuration. Of course, the former also holds for the connection between the load and the output shaft 7, therefore, also the torque level at the output shaft Tout and its rotational speed $\omega$out may be defined as separate parameters that are derivable from the road load torque Tload and vehicle rotational speed $\omega$veh.

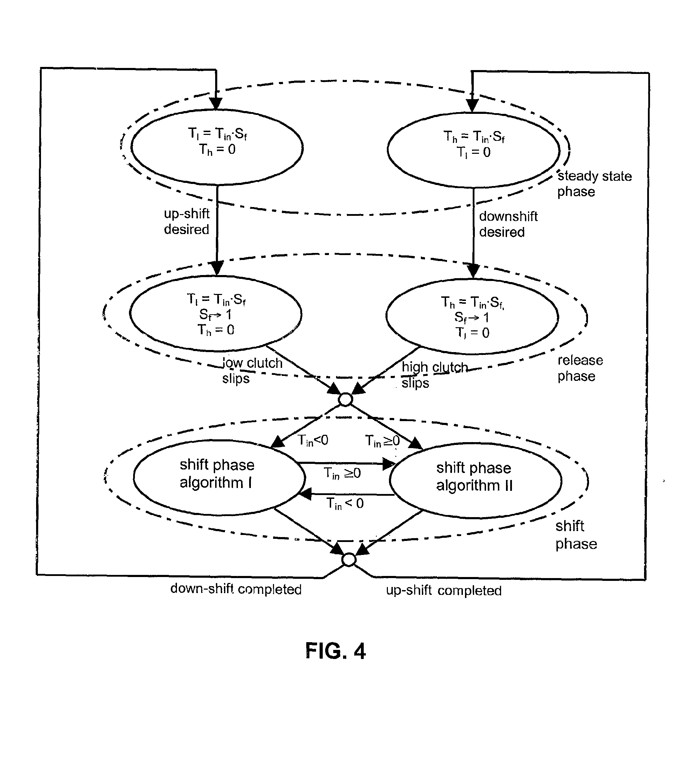

Figure 4 presents a known gearshift control method in terms of a state-machine, wherein the dash-dotted ovals indicate the three operational states or control phases of the gearset G that comprise a steady state phase, a release phase and a shift phase.

In the steady state phase either the low clutch L or the high clutch H is fully engaged, i.e. having a torque transmitting capacity Tl, Th sufficient for transmitting the input torque Tin with slip between the clutch plates 9 and 10, which capacity Tl, Th is determined by multiplying the input torque with a safety margin Sf larger than 1, whereas the torque capacity Tl, Th of the respective other clutch is controlled to zero. Such full engagement of the clutch L, H prevents it from slipping during steady state transmission operation, for example as a result of inaccuracies in the input torque Tin calculation or of shock loads that may be introduced in the driveline by the load. Thereby, reducing clutch wear and maximising the efficiency of the power transmission.

Departing from such steady state an up-shift may be desired when the low clutch L is fully engaged and a down-shift may be desired when the high clutch H is fully engaged. In either case, firstly the release phase is entered, wherein the engagement of the fully engaged clutch L or H is reduced to a level, where the clutch plates 9 and 10 of the respective clutch L, H are on the verge of, or just about, slipping, i.e. partly engaged. As indicated in figure 4, this may be achieved by a control method step wherein the safety margin Sf is accurately reduced to 1 in the shortest time possible, whereby the clutch engagement pressure is correspondingly reduced using equation (1). It is remarked that the desired control is inherently difficult to optimise and, at best, will be a compromise between control pace and accuracy.

After the release phase has been completed, the actual shift phase is initiated wherein the gearset and more in particular the clutch pressure Pcl of the low and high clutch L, H are controlled in a known manner. One such known manner is schematically indicated in figure 4 and consists of selecting one of the two shift phase control algorithms I and II in dependency on the sign of the input torque Tin. Hereby each such control algorithm I, II represents a control method incorporating two steps, however, to be performed in opposite order. In one such step, i.e. the so-called torque step, the power transmission path through the gearset G is transferred from the partly engaged clutch L, H to the respective other clutch L, H. In the other such step, the so called ratio step, the transmission speed ratio is adjusted between the Low and High ratio. The shift is realised by the opening of the first mentioned clutch L, H and, simultaneously, by the partly engaging the latter clutch through the proper adjustment of the respective clutch engagement pressures Pcl in a mutually co-ordinated manner. Hereby such proper adjustment in a mutually co-ordinated manner is generally pre-programmed in the control algorithms I and II after being empirically determined in an extensive testing and calibration procedure.

After the shift phase has been completed, the steady state phase is again activated and the clutch pressure Pcl of the clutch L, H that has been partly engaged in the shift phase is raised to fully engage the latter clutch L, H.

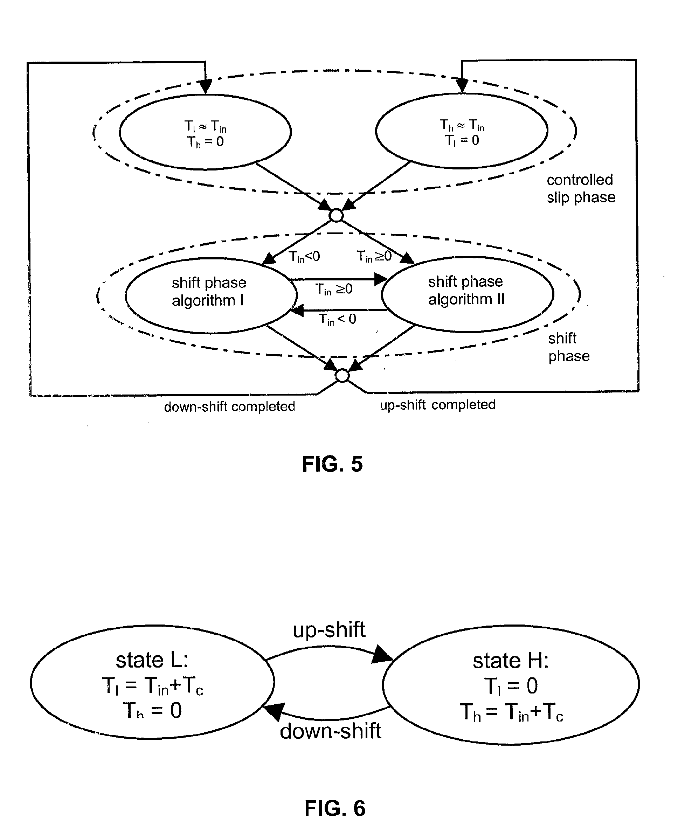

The invention proposes to replace the known gear shift control method by the method according to claim 1, which is illustrated by the state-machine depicted in figure 5. With such new method the entire gearshift procedure is advantageously simplified in an unexpected manner entirely obviating the release phase as well as the control difficulties associated therewith.

In the control approach according to the invention, the steady state phase and the release phase have been replaced by a single phase, which is referred to as the controlled slip phase. In the controlled slip phase the torque transmitting clutch L, H is only partly engaged, whereby the clutch torque capacity Tl, Th is controlled to be equal to the input torque Tin, whereby the clutch is controlled to show an, albeit small, amount of clutch slip Scl. According to the invention such controlled slip may be realised by determining the clutch slip Scl by measuring the difference between the rotational speed of the input shaft $\omega$in and that of the output shaft $\omega$out and keeping said difference within a pre-determined range by appropriately adjusting the clutch engagement pressure Pcl, in casu increasing this pressure Pcl as said difference becomes too large and vice versa. It was found in practice that is indeed possible using generally available hardware to implement such a control system.

Now, departing from such controlled slip phase according to the invention and when a gearshift is desired, the known shift phase can be immediately initiated, since the torque-transmitting clutch is already slipping. Immediately after the gearshift has been completed the controlled slip phase is again initiated.

It is remarked that the shift phase performed according to the known control strategy that is described in the above has the disadvantage that it can not be easily adapted to changing circumstances as it generally departs from pre-programmed clutch data and, moreover, involves an expensive and elaborate calibration procedure. Further, if during the shift phase the sign of the input torque changes, it must be switched between said shift phase control algorithms I and II, which in practice has proven to be rather difficult to realise in a comfortable and otherwise satisfying manner. Also the transition from the shift phase performed according to the known control strategy to the controlled slip phase according to the invention can be improved in term of control stability and robustness.

In a further elaboration of the gearshift control method according to the present invention it is also provided for an improved control strategy for the shift phase that may be advantageously integrated fully with the controlled slip phase. This improved control strategy for the shift is described in detail in the yet unpublished European patent application no. 02076403.1.

The state-machine for such an improved gearshift control method that integrates the controlled slip phase with a new shift phase is provided in figure 6. According to the invention the gearset is operated in either one of two states. Either in state L, wherein the low clutch L is partly engaged or in state H wherein the high clutch Ch is partly engaged in the manner as described in the above, i.e. the partly engaged clutch L, H having a torque capacity Tl, Th that is equal to the input torque Tin by controlling a small amount of clutch slip Scl, whereas the torque capacity Tl, Th of the respective other clutch is zero. Further, in a transition between such states L and H, i.e. during a gearshift action, the clutch torque capacities Tl, Th are controlled as follows:

$$\text{if Tin} \geq 0 \text{ then Tl} = 0, \text{ Th} = \text{Tin}$$

$$\text{if Tin} < 0 \text{ then Tl} = \text{Tin}, \text{ Th} = 0 \tag{2}$$

Thereby, a model of the drive-line model is used to determine the input torque Tin in dependency on a prescribed speed ratio trajectory set point i_gearset(t) and given a certain torque Teng generated or consumed (engine braking) by the engine and a torque Tloss that accounts for torque losses in the drive line between the engine and the input side of the gearset G, which can in practice often be considered negligible:

$$\text{Tin} = \text{Teng} - \text{J1} \cdot d(\omega\text{eng})/dt - \text{Tloss} \tag{3}$$

with:

$$d(\omega eng)/dt = d(i\_gearset(t))/dt \cdot \omega veh + i\_gearset(t) \cdot d(\omega veh)/dt \qquad (4)$$

wherein d(f)/dt denotes the time derivative of a function f and J1 represent the inertia value of inertia component 1 of the drive line, i.e. all the inertia of all drive-line components upstream of the clutches L, H of the gearset G.

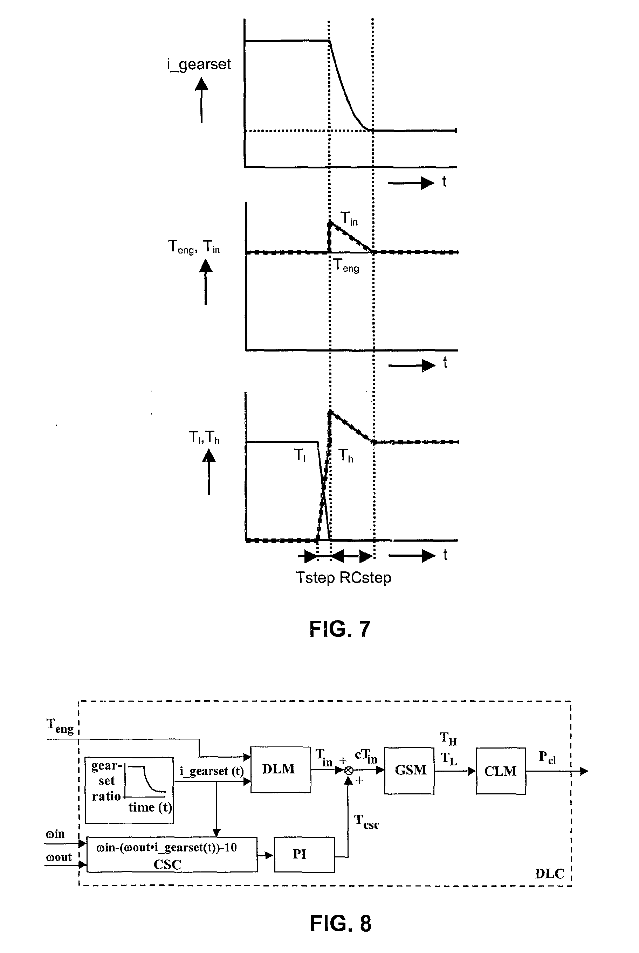

Figure 7 illustrates a typical up shift at positive input torque Tin performed in accordance with the invention. The upper graph of Fig. 3 gives the instantaneously prescribed ratio i\_gearset(t) of the gearset G versus, i.e. as a function of the passage of time t, whereby the x- or i\_gearset-axis values increase towards the y- or time axis. Factor 1/z and 1 are the output/input speed ratios of the transmission respectively with the low clutch L engaged, i.e. coupling the transmission input shaft 7 with the output shaft 8 via the gearset G, and with the high clutch H engaged, i.e. realising a direct drive between the transmission input shaft 7 and output shaft 8. The trajectory shown in the upper graph of figure 7 represent the prescribed manner in which the transmission speed ratio i\_gear between the output shaft 8 and the input shaft 7 is to be changed during the gearshift action (here a down-shit from speed ratio 1/z to ratio 1). The same trajectory can also be prescribed for an up shift simply by replacing 1/z by 1 and 1 by 1/z, whereby the x- or i\_gearset-axis values decrease towards the y- or time axis.

The middle graph shows the engine torque Teng as the smooth iine and the gearset G input torque Tin as the marked line both versus time t. In this example, the engine torque Teng is maintained at a constant level during the entire gearshift action. During the actual shifting of the transmission speed ratio, the input torque Tin no longer equals the engine torque Teng, because of a positive torque generated in the drive line due to the deceleration of the inertia component 1.

The bottom graph shows the low clutch L torque capacity Tl as the smooth line and the high clutch H torque capacity Th as the marked line both versus time t. Before the gearshift action is initiated the torque capacity Tl of the low clutch L is equal to the input torque Tin, whereas the torque capacity Th high clutch H is equal to zero, as prescribed by the invention. At the instant the gearshift action is initiated, the improved gearshift control method that the torque capacity Tl of the low clutch L is to be controlled to zero, whereas the torque capacity Th of the high clutch H is to be controlled to correspond to the input torque Tin. This step in the gearshift action is denoted the torque step Tstep, which is performed in advance of effecting the actual transmission speed ratio i\_gear change in the a second step denoted RCstep, wherein the clutch torque capacity Th of the engaging high clutch H is controlled to coincide with the input torque Tin in accordance with the invention. It is remarked that in case of negative input torque Tin, the said steps Tstep and RCstep have to be performed in a reverse order.

Figure 8 provides a possible block-scheme of a driveline controller DLC apparatus operating in accordance with the present invention. This controller DLC comprises several blocks. The prescribed desired speed ratio versus time t trajectory i\_gearset of the gearset G provides an instantaneously desired transmission speed ratio i\_gearset(t), which can have a constant value if no gearshift action is desired. Based on this desired speed ratio i\_gearset(t) and on the engine torque Teng, the gear set input torque Tin is determined using a drive-line model DLM , e.g. as defined by equations (3) and (4). In block CSC the actual clutch slip Scl is determined based on the difference between the rotational speed of the ingoing shaft 7 and the outgoing shaft 8 of the gearset G, i.e. ωin and ωout respectively, duly taking into account the instantaneously desired transmission speed ratio i\_gearset(t). This actual clutch slip Scl is compared with the desired clutch slip in accordance with the invention, i.e. the clutch slip that is set in the controlled slip phase in accordance with the invention. In figure 8 this desired clutch slip was set at 10 rpm as an example. A generally known PI controller is used to generate a clutch slip correction torque value Tsl based on the difference between said actual clutch slip Scl and said desired clutch slip of 10 rpm.

By summing the said input torque Tin and the clutch slip correction torque Tsl a corrected gearset input torque cTin is determined which is subsequently used to determine the desired clutch torque capacities Tl, Th in accordance with a gearset model GSM, e.g. as defined by equation (2). A clutch model CLM, e.g. as defined by equation (1) is used to obtain the corresponding clutch engagement pressure Pcl for each clutch L, H. Control signals representative of these pressures Pcl are fed to a hydraulic actuator. Generally speaking, these control signals will be electric currents used for operating electronically controllable pressure valves each controlling one respective clutch engagement pressures Pcl.

## Claims

1. Control method for a stepped automatic transmission for transmitting power between two inertia components (1; 2) at distinct speed ratios, which inertia components respectively represent at least an engine for generating an engine torque Teng on an input shaft (7) of said transmission and a load connected to an output shaft (8) of said transmission, with a first power transmission path (3, H, 6) for connecting said shafts (7, 8) at a first speed ratio and a second power transmission path (3, 4, L, 5, 6) for connecting said shafts (7, 8) at a second speed ratio, the said power transmission paths (3, H, 6; 3, 4, L, 5, 6), respectively provided with a high clutch (H) having an adjustable torque transmitting capacity Th and a low clutch (L) having an adjustable torque transmitting capacity TI, wherein, at least during normal operation of the stepped automatic transmission and at least when the speed ratio is constant, at least one of said torque transmitting capacities is adjusted to be essentially equal to the torque level on the input shaft (7), i.e. the input torque Tin.

2. Control method according to claim 1, wherein a rotational speed of the input shaft and a rotational speed of the output shaft is measured and wherein the at least one torque transmitting capacity is adjusted so as to maintain a difference between said rotational speeds within a predetermined range.

3. Control method according to claim 2, wherein said difference has a value in a range between 0 to 20 rpm.

4. Control method according to any one of the claims 1-3, having a fail-safe mode wherein, at least when the speed ratio is constant, the at least one torque transmitting capacities is adjusted to be substantially larger than the input torque Tin.

5. Control method according to any one of the preceding claims, wherein, at least during normal operation and both when the speed ratio is constant and when the speed ratio changes during a gearshift of the stepped automatic transmission, the torque transmitting capacities Th and TI are adjusted in dependency on the input torque Tin such that:

   a) if Tin $\geq$ 0 then Th = Tin and TI = 0
   b) if Tin < 0 then Th = 0 and TI = Tin

6. Control method according to any one of the preceding claims wherein the input torque Tin is determined in accordance with the equation:

$$Tin = Teng - Jinp \cdot \{d(i\_gearset(t))/dt \cdot \omega veh + i\_gearset(t) \cdot d(\omega veh)/dt\}$$

   wherein Jinp is the inertia of an inertia component (1) associated with the input shaft (7), $\omega$veh is the rotational speed of the output shaft and i_gearset(t) is the instantaneous speed ratio of the stepped automatic transmission.

7. Control method according to claim 6, wherein a desired speed ratio i_gearset versus time t trajectory is prescribed for the instantaneous speed ratio of the stepped automatic transmission i_gearset(t) during the gearshift follows a prescribed.

8. Vehicle driveline provided with an engine, a stepped automatic transmission designed for carrying out the control method according to any one of the claims 1 to x and a load.

9. Vehicle driveline according to claim 8 wherein the driveline is further provided with a continuously variable transmission (CVT) provided between the engine and the load on either side of the stepped automatic transmission.

10. Vehicle drive line according to claim 9 wherein a normal force in a frictional contact of the CVT is smaller than 1.3 times a minimum required normal force for transmitting the torque generated by the engine (Teng) through the CVT without notional slip in the said frictional contact.

**FIG. 1**

**FIG. 2**

**FIG. 3**

$T_l = T_{in} \cdot S_f$
$T_h = 0$

$T_h = T_{in} \cdot S_f$
$T_l = 0$

steady state phase

up-shift desired

downshift desired

$T_l = T_{in} \cdot S_f$
$S_f \rightarrow 1$
$T_h = 0$

$T_h = T_{in} \cdot S_{f,}$
$S_f \rightarrow 1$
$T_l = 0$

low clutch slips

high clutch slips

release phase

$T_{in} < 0$    $T_{in} \geq 0$

shift phase algorithm I

$T_{in} \geq 0$

$T_{in} < 0$

shift phase algorithm II

shift phase

down-shift completed

up-shift completed

FIG. 4

**FIG. 5**

**FIG. 6**

FIG. 7

FIG. 8

European Patent Office

# EUROPEAN SEARCH REPORT

Application Number

EP 02 07 9256

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 022 293 A (LEISING MAURICE B ET AL) 8 February 2000 (2000-02-08) * column 2, line 38 - line 47 * * column 4, line 66 - column 7, line 17 * * column 10, line 14 - line 25 * | 1,4,8 | F16H61/06 F16H61/00 |
| Y | | 2,3,9 | |
| D,Y | EP 1 069 331 A (VAN DOORNES TRANSMISSIE BV) 17 January 2001 (2001-01-17) * the whole document * | 2,3,9 | |
| X | EP 0 310 277 A (SATURN CORP) 5 April 1989 (1989-04-05) * claim 1 * | 1,2 | |
| X | EP 1 072 821 A (DEERE & CO) 31 January 2001 (2001-01-31) * claims 1-10 * | 1-3,5,6,8 | |
| A | US 4 267 750 A (ESPENSCHIED HELMUT ET AL) 19 May 1981 (1981-05-19) * column 1, line 49 - line 63 * | 1,5 | |
| A | DE 199 50 303 A (ZAHNRADFABRIK FRIEDRICHSHAFEN) 26 July 2001 (2001-07-26) * the whole document * | 1,6 | TECHNICAL FIELDS SEARCHED (Int.Cl.7) F16H |
| A | EP 1 188 969 A (JATCO TRANSTECHNOLOGY LTD) 20 March 2002 (2002-03-20) * the whole document * | 1,7 | |
| A | DE 199 50 053 A (ZAHNRADFABRIK FRIEDRICHSHAFEN) 19 April 2001 (2001-04-19) * the whole document * | 1,9 | |

-/--

The present search report has been drawn up for all claims

| Place of search | Date of completion of the search | Examiner |
|---|---|---|
| THE HAGUE | 7 March 2003 | Van Prooijen, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 07 9256

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 20198 A (BOSCH GMBH ROBERT ;LUH JOACHIM (DE); LAAN MAAIKE V D (NL); DOORNES) 22 March 2001 (2001-03-22) * page 11, line 32 - page 12, line 2; figure 6 * | 1,10 | |
| A | WO 95 09741 A (BOSCH GMBH ROBERT ;ZHANG HONG (DE)) 13 April 1995 (1995-04-13) * the whole document * | 1,8 | |
| D | & EP 0 670 789 A 13 September 1995 (1995-09-13) | | |

TECHNICAL FIELDS SEARCHED (Int.Cl.7)

The present search report has been drawn up for all claims

| Place of search | Date of completion of the search | Examiner |
|---|---|---|
| THE HAGUE | 7 March 2003 | Van Prooijen, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

# EP 1 411 277 A1

## ANNEX TO THE EUROPEAN SEARCH REPORT
## ON EUROPEAN PATENT APPLICATION NO.

EP 02 07 9256

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2003

| Patent document cited in search report | | Publication date | Patent family member(s) | | Publication date |
|---|---|---|---|---|---|
| US 6022293 | A | 08-02-2000 | NONE | | |
| EP 1069331 | A | 17-01-2001 | EP | 1069331 A1 | 17-01-2001 |
| | | | AT | 217394 T | 15-05-2002 |
| | | | DE | 69901441 D1 | 13-06-2002 |
| | | | DE | 69901441 T2 | 12-12-2002 |
| | | | ES | 2177197 T3 | 01-12-2002 |
| | | | JP | 2001065605 A | 16-03-2001 |
| | | | US | 6412617 B1 | 02-07-2002 |
| EP 0310277 | A | 05-04-1989 | US | 4805750 A | 21-02-1989 |
| | | | CA | 1306530 A1 | 18-08-1992 |
| | | | DE | 3885403 D1 | 09-12-1993 |
| | | | DE | 3885403 T2 | 24-02-1994 |
| | | | EP | 0310277 A2 | 05-04-1989 |
| | | | JP | 1108451 A | 25-04-1989 |
| | | | JP | 6021640 B | 23-03-1994 |
| | | | KR | 9104550 B1 | 06-07-1991 |
| EP 1072821 | A | 31-01-2001 | US | 6193630 B1 | 27-02-2001 |
| | | | AU | 4266900 A | 01-02-2001 |
| | | | BR | 0003020 A | 02-10-2001 |
| | | | CA | 2298817 A1 | 26-01-2001 |
| | | | EP | 1072821 A1 | 31-01-2001 |
| US 4267750 | A | 19-05-1981 | DE | 2742032 A1 | 29-03-1979 |
| | | | GB | 1604932 A | 16-12-1981 |
| | | | JP | 54053752 A | 27-04-1979 |
| DE 19950303 | A | 26-07-2001 | DE | 19950303 A1 | 26-07-2001 |
| EP 1188969 | A | 20-03-2002 | JP | 2002089691 A | 27-03-2002 |
| | | | EP | 1188969 A2 | 20-03-2002 |
| | | | US | 2002035009 A1 | 21-03-2002 |
| DE 19950053 | A | 19-04-2001 | DE | 19950053 A1 | 19-04-2001 |
| | | | WO | 0129451 A1 | 26-04-2001 |
| | | | EP | 1221003 A1 | 10-07-2002 |
| WO 0120198 | A | 22-03-2001 | WO | 0120198 A1 | 22-03-2001 |
| | | | EP | 1218654 A1 | 03-07-2002 |
| WO 9509741 | A | 13-04-1995 | DE | 4333899 A1 | 13-07-1995 |
| | | | WO | 9509741 A1 | 13-04-1995 |
| | | | DE | 59406214 D1 | 16-07-1998 |
| | | | EP | 0670789 A1 | 13-09-1995 |

EPO FORM P0459

For more details about this annex : see Official Journal of the European Patent Office, No. 12/82

14

**ANNEX TO THE EUROPEAN SEARCH REPORT
ON EUROPEAN PATENT APPLICATION NO.**

EP 02 07 9256

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2003

| Patent document cited in search report | Publication date | Patent family member(s) | Publication date |
|---|---|---|---|
| WO 9509741 A | | JP 8504259 T<br>US 5603672 A | 07-05-1996<br>18-02-1997 |

EPO FORM P0459

For more details about this annex : see Official Journal of the European Patent Office, No. 12/82